# EUROPÄISCHE PATENTSCHRIFT

(11) **EP 1 045 175 B1**
(45) Veröffentlichungstag und Bekanntmachung des Hinweises auf die Patenterteilung: **08.11.2006**
(21) Anmeldenummer: 00810206.3
(22) Anmeldetag: 13.03.2000
(51) Int. Cl.: F16J 15/28

(54) **Stopfbuchsenring**
Packing ring
Anneau de presse étoupé

(30) Priorität: 12.04.1999 EP 99810300
(43) Veröffentlichungstag der Anmeldung: 18.10.2000
(73) Patentinhaber: Wärtsilä Schweiz AG, 8401 Winterthur (CH)
(72) Erfinder: Fontana, Gian Paolo, 1950 Sion (CH)
(74) Vertreter: Sulzer Management AG

(56) Entgegenhaltungen:
- CH-A- 667 312
- US-A- 4 323 257
- US-A- 4 522 412

## Beschreibung

Die Erfindung betrifft einen Stopfbuchsenring für eine Stopfbuchse eines Zweittakt-Grossdieselmotors-gemäss dem Oberbegriff des unabhängigen Anspruchs.

Längsgespülte Zweitakt-Grossdieselmotoren, die beispielsweise als Hauptantriebsaggregate von Schiffen dienen, haben typischerweise mehrere Zylinder, in denen jeweils ein Kolben hin- und herbeweglich angeordnet ist. Der Kolben ist mittels einer Kolbenstange mit einem Kreuzkopf verbunden, der im Motorgehäuse in Gleitbahnen bewegbar gelagert ist. Der Kreuzkopf ist andererseits mittels einer Schubstange mit der Kurbelwelle des Motors verbunden. Zur Durchführung der Kolbenstange in den Zylinder ist eine Stopfbuchse vorgesehen, die typischerweise mehrere, bezüglich der Längsachse der Kolbenstange hintereinander angeordnete Stopfbuchsenringe umfasst, welche eine Stopfbuchsenpackung bilden.

Je nach Ihrer Funktion unterscheidet man verschiedene Arten der Stopfbuchsenringe. An dem zylinderseitigen Ende der Stopfbuchse sind ein oder mehrere Abstreifringe vorgesehen, deren primäre Funktion es ist, Schmutz wie beispielsweise Verbrennungsrückstände, Verschleiss- oder Abriebpartikel von der Kolbenstange abzustreifen, damit diese Verschmutzungen nicht in den Kurbelraum gelangen können. Daran anschliessend sind ein oder mehrere Dichtringe vorgesehen, deren Hauptfunktion darin besteht, den Kolbenunterseiten- oder Luftreceiverraum gegen den Kurbelraum abzudichten, damit die Spül- bzw. Ladeluft nicht entlang der Kolbenstange aus dem Luftreceiver entweichen kann. An die Dichtringe anschliessend sind ein oder mehrere Ölabstreifringe vorgesehen, um einen übermässigen, das heisst mehr als für die Schmierung der Kolbenstange notwendigen, Öltransport entlang der Kolbenstange in den Receiverraum zu vermeiden.

Üblicherweise bestehen bekannte Stopfbuchsenringe in Grossdieselmotoren aus einem Buntmetall- oder Graugusswerkstoff. Sie weisen z. B. eine oder mehrere Lippen auf, deren radial innere Begrenzungsflächen die Laufflächen bilden, die im Betriebszustand an der Kolbenstange entlang gleiten. Aufgrund der enormen Kräfte, die in einem Zweitakt-Grossdieselmotor wirken und den dadurch bedingten grossen Durchmesser der Kolbenstange von beispielsweise 30 cm und mehr, sowie dem betriebsbedingten Verschleiss, müssen die Stopfbuchsenringe in solchen Motoren sehr robust mit dementsprechend viel Material gefertigt sein. Folglich weisen bekannte Stopfbuchsenringe, wenn überhaupt, nur ein sehr beschränktes Formanpassungsvermögen auf, weil sie sehr biegesteif sind. Aus diesem Grunde werden heute Stopfbuchsenringe üblicherweise aus drei Ringsegmenten zusammengesetzt, damit die Ringe zumindest im Neuzustand näherungsweise über den gesamten Umfang der Kolbenstange anliegen. Die Ringsegmente werden durch eine sie in Umfangsrichtung umgebende Feder zusammengehalten und gegen die Kolbenstange vorgespannt.

Aus dem Dokument CH 667 312 ist ein Stopfbuchsenring für eine Stoffbuchse eines Grossdieselmotors bekannt.

Im Hinblick auf den Verschleiss weisen bekannte Stopfbuchsenringe für Zweitakt-Grossdieselmotoren Nachteile auf. Harte Abrieb-, Verschleiss- oder sonstige Schmutzpartikel, die sich an der Kolbenstange befinden, werden beim Vorbeibewegen der Kolbenstange an den Stopfbuchsenringen in die Laufflächen der Stopfbuchsenringe hineingedrückt, wodurch es zu einem unerwünschten Schmirgeleffekt kommt, der insbesondere an der Kolbenstange, aber auch in den Stopfbuchsenringen zu einem stark erhöhten Verschleiss führt.

Ein entscheidender Faktor für die Effizienz eines Stopfbuchsenrings bezüglich seiner Abstreif- bzw. Dichtwirkung ist die spezifische Flächenpressung, das heisst der Druck, mit dem die Lippen bzw. die Laufflächen der Ringe gegen die Kolbenstange gepresst werden. Die spezifische Flächenpressung darf aber insbesondere in Zweitakt-Grossdieselmotoren aufgrund der Fressneigung (scuffing) der Werkstoffpaarung Kolbenstange-Stopfbuchsenring nicht zu gross sein. Die relativ kleine spezifische Flächenpressung führt zu einer reduzierten Effizienz der Abstreif- und Dichtwirkung. Da zudem die Ringsegmente sehr steif sind, liegt der Stopfbuchsenring - über den Umfang der Kolbenstange gesehenungleichmässig stark an.

Diese reduzierte Abstreif- und Dichteffizienz ist insbesondere auch bei den modernen Zweitakt-Grossdieselmotoren, die mit höheren Kolbengeschwindigkeiten und höheren Ladedrücken arbeiten, sehr nachteilig. So gehen beispielsweise beträchtliche Mengen an Schmieröl verloren, das von der Kolbenstange in den Receiverraum transportiert wird.

Ausgehend von diesem Stand der Technik ist es eine Aufgabe der Erfindung, einen Stopfbuchsenring für einen Zweitakt-Grossdieselmotor mit Kreuzkopf vorzuschlagen, welcher Stopfbuchsenring eine verbesserte Abstreif- bzw. Dichteffizienz aufweist.

Der diese Aufgabe lösende Stopfbuchsenring ist durch die Merkmale des unabhängigen Anspruchs gekennzeichnet.

Erfindungsgemäss wird also ein Stopfbuchsenring vorgeschlagen für eine Stopfbuchse eines Zweittakt-Grossdieselmotors mit einem Zylinder, in welchem ein Kolben hin- und herbewegbar angeordnet ist, der mittels einer Kolbenstange mit einem Kreuzkopf verbunden ist, welche Stopfbuchse der Durchführung der Kolbenstange vom Luftreceiverraum in den Kurbelraum dient. Die Lauffläche des Stopfbuchsenrings, die im Betriebszustand entlang der Kolbenstange gleitet, ist mit einer harten, verschleissfesten Beschichtung versehen und die radiale Breite des Stopfbuchsenrings beträgt höchstens sieben Prozent, insbesondere höchstens fünf Prozent des Durchmessers der Kolbenstange.

Durch die Beschichtung der Lauffläche kann die spezifische Flächenpressung, mit welcher die Lauffläche des Stopfbuchsenrings gegen die Kolbenstange gedrückt wird, deutlich erhöht werden, ohne dass dadurch eine Fressneigung zwischen der Lauffläche und der Kolbenstange entsteht. Durch die erhöhte Flächenpressung wird die Abstreif- bzw. Dichtwirkung des Stopfbuchsenrings beträchtlich erhöht. Dies führt aufgrund der reduzierten Öldurchlässigkeit zu einer vorteilhaften Senkung des Ölverbrauchs und aufgrund der reduzierten Schmutzdurchlässigkeit der Stopfbuchse zu einem geringeren Verschleiss an der Kolbenstange und an den Stopfbuchsenringen, wodurch sich die Lebensdauer sowohl der Kolbenstange als auch der Stopfbuchse erhöht.

Durch die verbesserte Effizienz der Schmutzabstreifung und die Härte der Beschichtung wird ferner eine nachteilige Einbettung von Partikeln in die Lauffläche des Stopfbuchsenrings vermieden, sodass der schädliche Schmirgeleffekt nicht mehr auftritt. Daraus resultiert ebenfalls eine Verminderung des Verschleisses von Kolbenstange und Stopfbuchsenring.

Die radiale Breite des Stopfbuchsenrings beträgt höchstens sieben Prozent, insbesondere höchstens fünf Prozent des Durchmessers der Kolbenstange, um ein gutes Formanpassungsvermögen des Stopfbuchsenrings an die Kolbenstange und eine hohe sowie gleichmässige spezifische Flächenpressung zu ermöglichen.

Besonders bevorzugt ist die Beschichtung der Lauffläche eine Chrombeschichtung oder eine Chromkeramikbeschichtung, weil solche Beschichtungen sehr hart und verschleissfest sind. Als Werkstoffpaarung mit den heute üblicherweise für die Kolbenstange verwendeten Materialien, beispielsweise ein gehärteter Stahl, haben Chrom und Chromkeramik sehr gute Lauf- bzw. Gleiteigenschaften und eine sehr geringe Fressneigung.

Aus fertigungstechnischen Gründen ist die Lauffläche des Stopfbuchsenrings vorzugsweise galvanisch beschichtet und insbesondere galvanisch hartverchromt.

Es ist auch möglich, die Beschichtung mittels eines Spritzverfahrens oder eines Plasmaverfahrens oder eines Laserauftragverfahrens, insbesondere mittels Lasercladding, auf die Lauffläche aufzubringen.

Vorzugsweise ist der erfindungsgemässe Stopfbuchsenring segmentiert ausgestaltet, das heisst, er umfasst mindestens zwei Ringsegmente, wobei die Ringsegmente in Umfangsrichtung benachbart angeordnet sind, sodass sie sich zu einem Ring ergänzen. Die segmentierte Ausgestaltung gewährleistet ein möglichst gutes Anliegen des Stopfbuchsenringes an der Kolbenstange und wirkt sich somit positiv auf die Dicht- bzw. Abstreifwirkung des Stopfbuchsenrings auf.

Aufgrund seines reduzierten Verschleisses und der deutlich erhöhten spezifischen Flächenpressung, mit welcher der erfindungsgemässe Stopfbuchsenring betrieben werden kann, ist es möglich, seine radiale Breite und/oder seine axiale Höhe im Vergleich zu bekannten Stopfbuchsenringen kleiner auszugestalten. Aus dieser Massnahme resultiert eine geringere Biegesteifigkeit und somit ein höheres Formanpassungsvermögen. Folglich liegt der Stopfbuchsenring besser und, über seinen Umfang betrachtet, gleichmässsiger an der Kolbenstange an, was zu einer vorteilhaften Erhöhung der Abstreif- bzw. Dichtwirkung führt. Diese bleibt über lange Betriebszeiten im wesentlichen konstant, auch dann, wenn im späteren Betrieb Verschleiss an der Kolbenstange auftritt.

Wegen des erhöhten Formanpassungsvermögens sind Ausgstaltungen möglich, bei denen der Stopfbuchsenring nur noch aus genau zwei Ringsegmenten besteht, ohne dass hierdurch das Anliegen des Stopfbuchsenrings an die Kolbenstange negativ beeinflusst wird. Die Massnahme, nur zwei Ringsegmente vorzusehen, ist besonders bevorzugt, weil sich hierdurch die Anzahl der Schlösser, das heisst der Stösse zwischen benachbarten Ringsegmenten reduzieren lässt, was sich positiv auf die Abstreif- bzw. Dichtwirkung des Stopfbuchsenrings auswirkt.

Zur Anpressung des Stopfbuchsenrings an die Kolbenstange und zum Zusammenhalten der Ringsegmente bei segmentierten Ausführungsformen ist bevorzugt eine den Umfang des Stopfbuchsenrings umschliessenden Feder vorgesehen, welche den Stopfbuchsenring gegen die Kolbenstange drückt.

Durch den erfindungsgemässen Stopfbuchsenring wird eine Stopfbuchse für einen Zweittakt-Kreuzkopf-Grossdieselmotor ermöglicht, welche im Vergleich zu bekannten Stopfbuchsen eine deutlich erhöhte Abstreif-und Dichtwirkung aufweist. Bei einer solchen Stopfbuchse können einer, mehrere oder vorzugsweise alle Stopfbuchsenringe gemäss der Erfindung ausgestaltet sein. Aufgrund der erhöhten Effizienz und des reduzierten Verschleisses sowohl der Ringe als auch der Kolbenstange weist ein Grossdieselmotor mit einer erfindungsgemässen Stopfbuchse ein verbessertes Langzeitbetriebsverhalten auf. Insbesondere die Elastizität der Stopfbuchsenringe gewährleistet, dass auch beim Auftreten von Verschleiss an der Kolbenstange bzw. an den Stopfbuchsenringen eine gute Abstreif-und Dichtwirkung erhalten bleibt.

Durch die hohe Effizienz der Öl- und Schmutzabstreifung sowie der Dichtwirkung ist es ferner möglich, die Anzahl der Stopfbuchsenringe im Vergleich zu bekannten Stopfbuchsen zu reduzieren. Dies hat den Vorteil, dass die Stopfbuchse insgesamt kleiner ausgestaltet werden kann, wodurch sich auch die Höhe des Grossdieselmotors reduzieren lässt. Ferner ist die reduzierte Ringanzahl aus Kostengründen vorteilhaft.

Weitere vorteilhafte Massnahmen und bevorzugte Ausgestaltungen der Erfindung ergeben sich aus den abhängigen Ansprüchen.

Im Folgenden wird die Erfindung anhand von Ausführugsbeispielen und anhand der Zeichnung näher erläutert. In der schematischen, nicht massstäblichen Zeichnung zeigen:
- Fig. 1:: eine Schnittdarstellung einer Stopfbuchse mit Ausführungsbeispielen von erfindungsgemässen Stopfbuchsenringen,
- Fig. 2:: eine Aufsicht auf ein Ausführungsbeispiel eines erfindungsgemässen Stopfbuchsenrings,
- Fig. 3:: einen Schnitt durch das in Fig. 2 dargestellte Ausführungsbeispiel entlang der Schnittlinie lll-lll in Fig. 2,
- Fig. 4:: einen Schnitt durch das in Fig. 2 dargestellte Ausführungsbeispiel entlang der Schnittlinie IV-IV in Fig. 2,
- Fig. 5:: einen Schnitt entsprechend Fig. 4 jedoch für ein anderes Ausführungsbeispiel des erfindungsgemässen Stopfbuchsenrings, und
- Fig. 6:: einen Schnitt entsprechend Fig. 4 jedoch für ein weiteres Ausführungsbeispiel des erfindungsgemässen Stopfbuchsenrings.

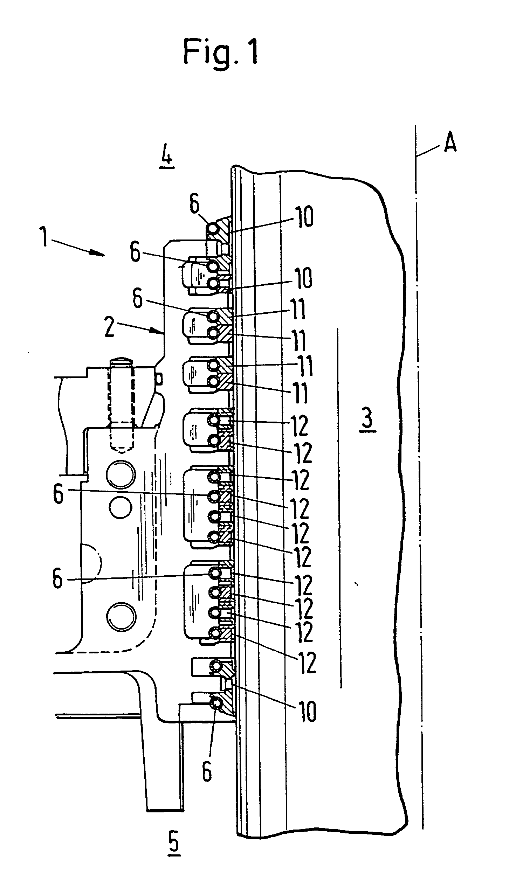

Gemäss der Erfindung wird ein Stopfbuchsenring für eine Stopfbuchse eines Zweitakt-Kreuzkopf-Grossdieselmotors vorgeschlagen. Solche Motoren, die beispielsweise als Antriebsaggregate für Schiffe eingesetzt werden, haben bekanntermassen mehrere Zylinder, in denen jeweils ein Kolben hin- und herbewegbar angeordnet ist. Der Kolben ist mittels einer Kolbenstange 3 (Fig. 1) mit einem Kreuzkopf verbunden, welcher andererseits über eine Schubstange mit einer Kurbelwelle verbunden ist. Der Kreuzkopf ist in Gleitbahnen linear bewegbar gelagert. Die Gleitbahnen sind im Kurbelraum 5 des Motorengehäuses fixiert, der bezüglich der üblichen Gebrauchslage unterhalb des Zylinders angeordnet ist. Zur Durchführung der Kolbenstange aus dem Kurbelraum 5 in den Luftreceiverraum 4 dient eine Stopfbuchse.

Fig. 1 zeigt in einer Schnittdarstellung ein Ausführungsbeispiel einer Stopfbuchse für einen längsgespülten Zweitakt-Kreuzkopf-Grossdieselmotor, die gesamthaft mit dem Bezugszeichen 1 bezeichnet ist. Die Stopfbuchse 1 umfasst ein Gehäuse 2, das bezüglich des Motorengehäuses (nicht dargestellt) fixiert ist und die Kolbenstange 3 umgibt. In dem Gehäuse 2 sind in an sich bekannter Weise mehrere Stopfbuchsenringe 10,11,12 bezüglich der Längsachse A der Kolbenstange 3 hintereinander angeordnet, die jeweils die Kolbenstange 3 umschliessen und im Betriebszustand an dieser entlang gleiten . Die beiden darstellungsgemäss oberen Stopfbuchsenringe 10, welche an dem Ende der Stopfbuchse 1 angeordnet sind, das dem Luftreceiverraum 4 zugewandt ist, dienen als Abstreifringe 10, deren primäre Funktion es ist, Schmutz wie beispielsweise Verbrennungsrückstände, Verschleiss- oder Abriebpartikel von der Kolbenstange 3 abzustreifen. Anschliessend an die Abstreifringe 10 sind mehrere - hier vier - Dichtringe 11 vorgesehen, deren Hauptfunktion darin besteht, den Luftreceiverraum 4 gegen den Kurbelraum 5 abzudichten, damit die Spül- bzw. Ladeluft nicht entlang der Kolbenstange 3 aus dem Zylinder entweichen kann. An die Dichtringe 11 anschliessend sind mehrere - hier zehn -Ölabstreifringe 12 vorgesehen, um einen übermässigen, das heisst mehr als für die Schmierung der Kolbenstange notwendigen, Öltransport entlang der Kolbenstange 3 in den Luftreceiver zu vermeiden. Am anderen, dem Kurbelraum 5 zugewandten Ende der Stopfbuchse 1 ist nochmals ein Abstreifring vorgesehen, der den Transport von Öl aus dem Kurbelraum 5 in den Luftreceiverraum 4 unterbindet.

Jeder Stopfbuchsenring 10,11,12 ist mittels mindestens einer Feder 6, die den Stopfbuchsenring 10 oder 11 oder 12 entlang seines Umfangs umschliesst, nach innen gegen die Kolbenstange 3 vorgespannt und wird so mit einer spezifischen Flächenpressung, die je nach Typ des Stopfbuchsenrings verschieden sein kann, gegen die Kolbenstange 3 gedrückt.

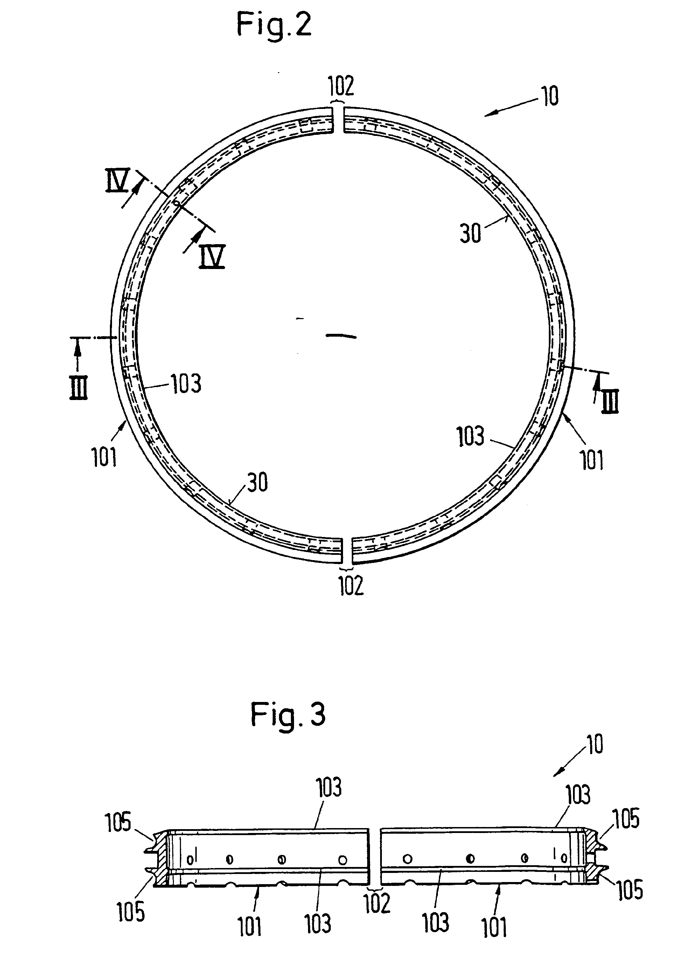

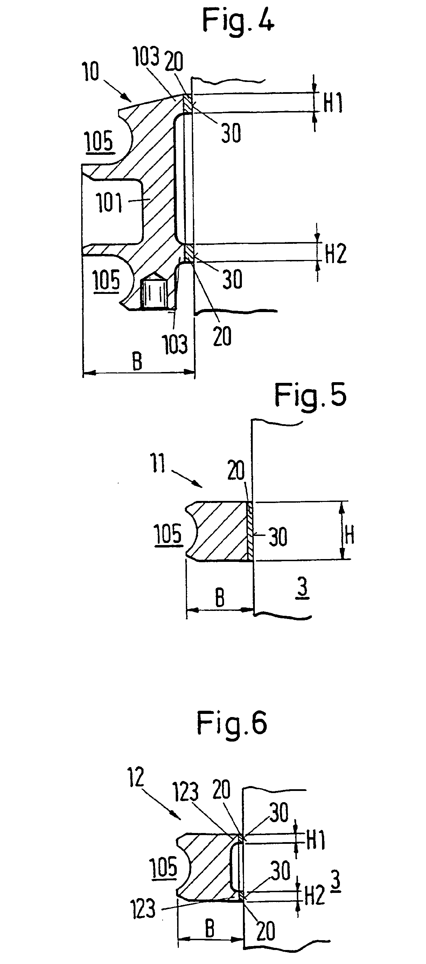

Die Fig. 2,3 und 4 zeigen im Detail den gemäss der Darstellung in Fig. 1 obersten Abstreifring 10, welcher als Ausführungsbeispiel eines erfindungsgemässen Stopfbuchsenrings ausgebildet ist. Fig. 2 zeigt den Abstreifring 10 in einer Aufsicht aus der Richtung der Längsachse A, Fig. 3 zeigt einen Schnitt durch den Abstreifring 10 entlang der Schnittlinie lll-lll in Fig. 2 und Fig. 4 zeigt die Querschnittfläche des Abstreifrings 10 entlang der Schnittlinie IV-IV in Fig. 2, wobei zusätzlich zum besseren Verständnis die Kolbenstange 3 angedeutet ist.

Der Abstreifring 10 besteht aus zwei im wesentlichen identischen Ringsegmenten 101, die bezüglich der Umfangsrichtung zueinander benachbart angeordnet sind. Jeweils zwischen den einander zugewandten Enden der Ringsegmente 101 befindet sich ein Stoss oder Schloss 102, das als radial verlaufender Spalt ausgebildet ist. An seiner Innenseite weist jedes Ringsegment 101 mindestens zwei radial nach innen vorstehende Lippen 103 auf, die sich in Umfangsrichtung jeweils entlang des gesamten Ringsegments 101 erstrecken und die bezüglich der axialen Richtung, womit die Richtung der Längsachse A der Kolbenstange 3 gemeint ist, voneinander beabstandet sind. Die beiden radial innenliegenden Begrenzungsflächen der Lippen 103, die eine axiale Höhe H1 bzw. H2 aufweisen, bilden gemeinsam die Lauffläche 30 des Abstreifrings 10, die im Betriebszustand entlang der Kolbenstange 3 gleitet. Die Lauffläche 30 hat folglich eine axiale Höhe H=H1+H2. An der Aussenseite jedes Ringsegments 101 sind jeweils zwei in Umfangsrichtung verlaufende Nuten 105 zur Aufnahme der Federn 6 (siehe Fig. 1) vorgesehen. Bezüglich der axialen Richtung sind die Nuten 105 jeweils so angeordnet, dass die von ihnen aufgenommenen Federn 6 den Abstreifring 10 etwa auf Höhe der Lippen 103 vorspannen.

Erfindungsgemäss ist die Lauffläche 30 des Stopfbuchsenrings 10 mit einer harten, verschleissfesten Beschichtung 20 versehen. Die Beschichtung 20 weist eine Vickershärte von mindestens 800 HV1 auf und besteht aus einem Material, das einen geringeren Verschleiss aufweist als das Grundmaterial, aus welchem der Stopfbuchsenring gefertigt ist, und das zudem ein sehr gutes Laufverhalten auf dem Werkstoff, aus dem die Kolbenstange 3 besteht, aufweist. Bei den heute in Zweitakt-Grossdieselmotoren üblichen, meistens gehärteten Kolbenstangen hat sich insbesondere Chrom und Chromkeramik als besonders geeignetes Material für die Beschichtung 20 der Lauffläche 30 erwiesen. Vorzugsweise wird das Chrom elektrolytisch aufgetragen, beispielsweise ist die Lauffläche 30 galvanisch hartverchromt. Es hat sich bewährt, wenn die Dicke der Beschichtung 20 mindestens 0.3 mm beträgt.
Bei dem hier beschriebenen Ausführungsbeispiel liegt die Dicke der Beschichtung zwischen 0.3 mm und 0.7 mm.

Die Beschichtung 20 kann auch aus anderen harten, verschleissfesten Werkstoffen bestehen, die ein gutes Laufverhalten auf der Kolbenstange 3 aufweisen. Beispielsweise sind Stellite, Tribaloy, Nickelphosphor oder vergleichbare Werkstoffe geeignet. Je nach verwendetem Werkstoff eignen sich zum Aufbringen der Beschichtung 20 neben elektrolytischen Verfahren auch andere Verfahren wie Spritzverfahren, Plasmaverfahren oder Laserauftragsverfahren, insbesondere Lasercladding.

Als Grundmaterial, aus dem der Abstreifring 10 hergestellt wird, eignen sich insbesondere alle die Werkstoffe, die üblicherweise für Stopfbuchsenringe in Zweitakt-Grossdieselmotoren verwendet werden, z. B. Grauguss-, Stahl-, Nichteisenmetall- oder Buntmetallwerkstoffe wie Bleibronze, Kupfer-Aluminium-Legierungen, Kupfer-Blei-Legierungen, Kupfer-Zinn-Legierungen.

Nachdem der Abstreifring 10 bzw. seine Ringsegmente 101 aus dem Grundmaterial hergestellt sind, wird auf seine Laufflächen 30 die Beschichtung 20 aufgebracht.

Aufgrund der harten, verschleissfesten Beschichtung 20 hat der erfindungsgemässe Stopfbuchsenring 10 deutlich günstigere Verschleisswerte und damit eine höhere Lebensdauer als bekannte Stopfbuchsenringe. Da zudem eine Einbettung von harten Partikeln in die Lauffläche 30 vermieden wird und somit kein Schmirgeleffekt auftritt, reduzieren sich auch die Verschleisserscheinungen an der Kolbenstange 3 erheblich. Zudem ermöglicht es die Beschichtung 20, den Abstreifring 10 mit einer wesentlich höheren spezifischen Flächenpressung gegen die Kolbenstange zu drücken, ohne dass dadurch eine Fressneigung zwischen der Lauffläche 30 und der Kolbenstange 3 entsteht. Die höhere Flächenpressung kann durch eine Reduktion der Gesamthöhe H der Lauffläche 30 (im Vergleich zu bekannten Abstreifringen) erreicht werden und/oder durch die Verwendung von stärkeren Federn 6 in den Nuten 105 des Abstreifrings 10. Bei dem hier beschriebenen Ausführungsbeispiel wird der Abstreifring 10 mit einer spezifischen Flächenpressung von mindestens 30 N/cm² gegen die Kolbenstange 3 gedrückt. Dies führt zu einer deutlichen Verbesserung der Abstreifwirkung des Abstreifrings 10.

Insbesondere aufgrund des stark verminderten Verschleisses kann der Abstreifring 10 mit einer im Vergleich zu bekannten Ringen deutlich reduzierten radialen Breite B ausgestaltet werden. Die radiale Breite des Abstreifrings 10 beträgt erfindungsgemäss höchstens sieben Prozent und besonders bevorzugt höchstens fünf Prozent des Durchmessers der Kolbenstange 3. Diese Massnahme hat neben der Materialersparnis den Vorteil, dass der Abstreifring 10 wesentlich elastischer ist und ein hohes Formanpassungsvermögen an die Kolbenstange 3 aufweist, wodurch sich seine Abstreifwirkung noch erhöht. Zudem ermöglicht es die Elastizität des Abstreifrings 10, diesen aus nur zwei Ringsegmenten 101 herzustellen. Dadurch wird die Anzahl der Schlösser 102 reduziert, was sich ebenfalls positiv auf die erzielte Absztreifeffizienz auswirkt. Die höhere Elastizität ist ferner vorteilhaft, weil dadurch eine über den Umfang betrachtet konstantere Anpressung der Laufflächen 30 resultiert, die auch beim Auftreten von betriebsbedingtem Verschleiss erhalten bleibt.

Es versteht sich jedoch, dass ein erfindungsgemässer Stopfbuchsenring 10,11,12 auch aus drei, vier oder mehr Ringsegmenten bestehen kann.

Die Erläuterungen bezüglich des in den Fig. 2-4 dargestellten Ausführungsbeispiels des erfindungsgemässen Stopfbuchsenrings gelten in sinngemäss gleicher Weise auch für die Dichtringe 11 und die Ölabstreifringe 12 oder für andere Typen von Stopfbuchsenringen in der Stopfbuchse eines Zweitakt-Grossdieselmotors.

Fig. 5 zeigt in einer zu Fig. 4 analogen Darstellung die Querschnittsfläche eines Ausführungsbeispiels des Dichtrings 11, der als erfindungsgemässer Stopfbuchsenring ausgebildet ist. Die Bezugszeichen haben die bereits erläuterte Bedeutung. Bei dem Dichtring 11 bildet die gesamte radial innenliegende Begrenzungsfläche die Lauffläche 30, die mit der Beschichtung 20 versehen ist. Dieser Dichtring 11 eignet sich aufgrund seiner hohen Dichtwirkung insbesondere auch für solche Grossdieselmotoren, die mit hohem Spülluft- bzw. Ladeluftdruck arbeiten.

Fig. 6 zeigt in einer zu Fig. 4 analogen Darstellung die Querschnittsfläche eines Ausführungsbeispiels des Ölabstreifrings 12, der als erfindungsgemässer Stopfbuchsenring ausgestaltet ist. Die Bezugszeichen haben die bereits erläuterte Bedeutung. Bei dem Ölabstreifring 12 sind in ähnlicher Weise wie bei dem Abstreifring 10 zwei Lippen 123 vorgesehen, deren radial innenliegende Begrenzungsflächen zusammen die Lauffläche 30 bilden, die mit der Beschichtung 20 versehen ist.

In der in Fig. 1 dargestellen Stopfbuchse 1 für einen Zweitakt-Kreuzkopf-Grossdieselmotor können alle Stopfbuchsenringe 10,11,12 gemäss der Erfindung ausgestaltet sein. Es sind aber auch solche Ausgestaltungen der Stopfbuchse 1 möglich, bei denen nur einer oder einige der Stopfbuchsenringe mit der Beschichtung 20 auf der Lauffläche 30 versehen sind.

Durch die Erfindung wird also ein Stopfbuchsenring 10,11,12 für einen Zweitakt-Kreuzkopf-Grossdieselmotor vorgeschlagen, dessen Lauffläche 30 mit einer harten, verschleissfesten Beschichtung 20 versehen ist. Dadurch wird eine höhere spezifische Flächenpressung ermöglicht. Der erfindungsgemässe Stopfbuchsenring weist im Vergleich zu bekannten Ringen eine deutlich höhere Abstreif- bzw. Dichtwirkung auf, wodurch sich der Verschleiss an Kolbenstange und Stopfbuchse sowie der Ölverbrauch deutlich reduzieren.

## Patentansprüche

1. Stopfbuchsenring für eine Stopfbuchse eines Zweittakt-Grossdieselmotors mit einem Zylinder, in welchem ein Kolben hin- und herbewegbar angeordnet ist, der mittels einer Kolbenstange (3) mit einem Kreuzkopf verbunden ist, welche Stopfbuchse (1) der Durchführung der Kolbenstange (3) vom Luftreceiverraum (4) in den Kurbelraum (5) dient, **dadurch gekennzeichnet, dass** die Lauffläche (30) des Stopfbuchsenrings (10,11,12), die im Betriebszustand entlang der Kolbenstange (3) gleitet, mit einer harten, verschleissfesten Beschichtung (20) versehen ist und dass die radiale Breite (B) des Stopfbuchsenrings höchstens sieben Prozent, insbesondere höchstens fünf Prozent des Durchmessers der Kolbenstange beträgt.

2. Stopfbuchsenring nach Anspruch 1, bei welchem die Beschichtung (20) eine Chrombeschichtung oder eine Chromkeramikbeschichtung ist.

3. Stopfbuchsenring nach einem der Ansprüche 1 oder 2, dessen Lauffläche (30) galvanisch beschichtet ist.

4. Stopfbuchsenring nach Anspruch 1 oder 2, bei welchem die Beschichtung (20) mittels eines Spritzverfahrens oder eines Plasmaverfahrens oder eines Laserauftragverfahrens, insbesondere mittels Lasercladding, auf die Lauffläche aufgebracht ist.

5. Stopfbuchsenring nach einem der vorangehenden Ansprüche, welcher mindestens zwei Ringsegmente (101) umfasst, wobei die Ringsegmente (101) in Umfangsrichtung benachbart angeordnet sind, sodass sie sich zu einem Ring (10,11,12) ergänzen.

6. Stopfbuchsenring nach einem der vorangehenden Ansprüche, der aus zwei Ringsegmenten (101) besteht.

7. Stopfbuchsenring nach einem der vorangehenden Ansprüche mit einer den Umfang des Stopfbuchsenrings (10,11,12) umschliessenden Feder (6), welche den Stopfbuchsenring (10,11,12) gegen die Kolbenstange (3) drückt.

8. Stopfbuchse für einen Zweittakt-Kreuzkopf-Grossdieselmotor, welche mindestens einen Stopfbuchsenring (10,11,12) gemäss einem der vorangehenden Ansprüche umfasst.

9. Zweitakt-Kreuzkopf-Grossdieselmotor mit einem Stopfbuchsenring (10,11,12) gemäss einem der Ansprüche 1-7 oder mit einer Stopfbuchse (1) gemäss Anspruch 8.

## Claims

1. A stuffing box ring for a stuffing box of a two stroke large diesel engine having a cylinder in which a piston is arranged so as to be movable to and fro, the piston being connected to a cross head by means of a piston rod (3), said stuffing box (1) serving for the passage of the piston rod (3) from the air receiver chamber (4) into the crankshaft space (5), **characterized in that** the running surface (30) of the stuffing box ring (10, 11, 12), which slides along the piston rod (3) in the operating state, is provided with a hard, wear resistant coating (20) and **in that** the radial width (B) of the stuffing box ring amounts to at most seven percent, in particular to at most five percent, of the diameter of the piston rod.

2. A stuffing box ring in accordance with claim 1, in which the coating (20) is a chromium coating or a chromium ceramic coating.

3. A stuffing box ring in accordance with one of the claims 1 or 2, the running surface (30) of which is galvanically coated.

4. A stuffing box ring in accordance with claim 1 or claim 2, in which the coating (20) is applied to the running surface by means of a spray method or of a plasma method or of a laser application method, in particular by means of laser cladding.

5. A stuffing box ring in accordance with any one of the preceding claims, including at least two ring segments (101), with the ring segments (101) being arranged adjacently in the peripheral direction so that they complement one another to form a ring (10, 11, 12).

6. A stuffing box ring in accordance with any one of the preceding claims, which consists of two ring segments (101).

7. A stuffing box ring in accordance with any one of the preceding claims, including a spring (6) which surrounds the periphery of the stuffing box ring (10, 11, 12) and which presses the stuffing box ring (10, 11, 12) against the piston rod (3).

8. A stuffing box for a two stroke large cross head diesel engine, including at least one stuffing box ring (10, 11, 12) in accordance with any one of the preceding claims.

9. Two stroke large cross head diesel engine having a stuffing box ring (10, 11, 12) in accordance with any one of the claims 1 to 7 or a stuffing box (1) in accordance with claim 8.

## Revendications

1. Bague de presse-étoupe pour un presse-étoupe d'un moteur diesel deux temps de grande puissance avec un cylindre dans lequel est disposé un piston décrivant un mouvement alternatif qui est relié au moyen d'une bielle (3) à une crosse de piston, ledit presse-étoupe (1) servant au passage de la bielle (3) de la chambre d'admission d'air (4) dans le carter de vilebrequin (5), **caractérisée en ce que** la portée (30) de la bague de presse-étoupe (10, 11, 12) qui en fonctionnement glisse le long de la bielle (3) est munie d'un revêtement dur résistant à l'usure (20) et **en ce que** la largeur radiale (B) de la bague de presse-étoupe est au maximum égale à sept pour cent, en particulier au maximum égale à cinq pour cent du diamètre de la bielle.

2. Bague de presse-étoupe selon la revendication 1, dans laquelle le revêtement (20) est un revêtement au chrome ou un revêtement chrome/céramique.

3. Bague de presse-étoupe selon la revendication 1 ou 2, dont la portée (30) est revêtue galvaniquement.

4. Bague de presse-étoupe selon la revendication 1 ou 2, dans laquelle le revêtement (20) est déposé suivant un procédé de pulvérisation ou un procédé de dépôt par plasma ou par laser, en particulier par placage au laser, sur la portée.

5. Bague de presse-étoupe selon l'une des revendications précédentes, qui comprend au moins deux segments de bague (101), les segments de bague (101) étant disposés voisins l'un de l'autre dans le sens de la circonférence de façon à se compléter en formant une bague (10, 11, 12).

6. Bague de presse-étoupe selon l'une des revendications précédentes, qui se compose de deux segments de bague (101).

7. Bague de presse-étoupe selon l'une des revendications précédentes, avec un ressort (6) entourant la circonférence de la bague de presse-étoupe (10, 11, 12) qui comprime la bague de presse-étoupe (10, 11, 12) contre la bielle (3).

8. Presse-étoupe pour un moteur diesel deux temps de grande puissance à crosse de piston, qui comprend au moins une bague de presse-étoupe (10, 11, 12) selon l'une des revendications précédentes.

9. Moteur diesel deux temps de grande puissance à crosse de piston avec une bague de presse-étoupe (10, 11, 12) selon l'une des revendications 1 à 7 ou avec un presse-étoupe (1) selon la revendication 8.
